(19) Europäisches Patentamt
European Patent Office
Office européen des brevets

(11) **EP 4 090 570 B1**

(12) **EUROPÄISCHE PATENTSCHRIFT**

(45) Veröffentlichungstag und Bekanntmachung des Hinweises auf die Patenterteilung:
**20.03.2024  Patentblatt 2024/12**

(21) Anmeldenummer: **20837946.1**

(22) Anmeldetag: **16.12.2020**

(51) Internationale Patentklassifikation (IPC):
**B60W 40/076** (2012.01)    **B60W 40/072** (2012.01)

(52) Gemeinsame Patentklassifikation (CPC):
**B60W 40/076; B60W 40/072;** B60W 2420/403; B60W 2520/28

(86) Internationale Anmeldenummer:
**PCT/EP2020/086341**

(87) Internationale Veröffentlichungsnummer:
**WO 2021/144105 (22.07.2021 Gazette 2021/29)**

(54) **VERFAHREN ZUR BESTIMMUNG DES AKTUELLEN QUERNEIGUNGSWINKELS EINER FAHRBAHN**

METHOD FOR DETERMINING THE CURRENT ANGLE OF LATERAL INCLINATION OF A ROADWAY

PROCÉDÉ DE DÉTERMINATION DE L'ANGLE ACTUEL D'INCLINAISON LATÉRALE D'UNE CHAUSSÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.01.2020  DE 102020100943**

(43) Veröffentlichungstag der Anmeldung:
**23.11.2022  Patentblatt 2022/47**

(73) Patentinhaber: **Valeo Schalter und Sensoren GmbH**
**74321 Bietigheim-Bissingen (DE)**

(72) Erfinder: **UESTUENEL, Eser**
**74321 Bietigheim-Bissingen (DE)**

(74) Vertreter: **Withopf, Kristina**
**Valeo Schalter und Sensoren GmbH**
**CDA-IP**
**Laiernstraße 12**
**74321 Bietigheim-Bissingen (DE)**

(56) Entgegenhaltungen:
**CN-A- 108 569 289    KR-A- 20180 136 229**

• **USTUNEL ESER ET AL: "Vision-based road slope estimation methods using road lines or local features from instant images", IET INTELLIGENT TRANSPORT SYSTEMS, THE INSTITUTION OF ENGINEERING AND TECHNOLOGY, MICHAEL FARADAY HOUSE, SIX HILLS WAY, STEVENAGE, HERTS. SG1 2AY, UK, Bd. 13, Nr. 10, 1. Oktober 2019 (2019-10-01), Seiten 1590-1602, XP006082487, ISSN: 1751-956X, DOI: 10.1049/IET-ITS.2018.5479**

**Beschreibung**

Die vorliegende Erfindung betrifft ein Verfahren zur Bestimmung des aktuellen Querneigungswinkels $\alpha$ einer Fahrbahn mittels eines Fahrzeuges, mindestens umfassend die Schritte:

a) Bestimmung des aktuellen Krümmungsradius K der Fahrbahn;
b) Messen der aktuellen Geschwindigkeiten v(1,2) mindestens zweier unterschiedlicher Räder des Fahrzeugs, wobei eines der Räder mit der Geschwindigkeit v(1) näher zum aktuellen Kurvenmittelpunkt der Fahrbahn liegt;
c) Berechnung des aktuellen Querneigungsradius Q der Fahrbahn auf Basis der aktuellen Radgeschwindigkeit v(1), dem Radabstand d und der Differenz der im Verfahrensschritt b) gemessenen Radgeschwindigkeiten;
d) Berechnung des aktuellen Neigungswinkels $\alpha$ des Fahrzeugs auf der Fahrbahn unter Verwendung des Quotienten aus dem im Verfahrensschritt a) bestimmten Krümmungsradius K und dem im Verfahrensschritt c) berechneten aktuellen Querneigungsradius Q. Die vorliegende Erfindung betrifft auch ein Fahrunterstützungssystem gemäß Anspruch 9.

Die Automatisierung im Fahrzeugbereich hat in den letzten Jahren einen immer größeren Stellenwert eingenommen. Nicht zuletzt fußt diese Entwicklung auf immer größeren Fortschritten im Bereich der Sensortechnik, sowie der Möglichkeit mit immer höheren Geschwindigkeiten große Datenmengen verarbeiten zu können. Während in der Vergangenheit der Fokus der Entwicklung auf den technischen Möglichkeiten des Einzelsystems lagen, nehmen heutzutage komplexere technische Lösungen einen immer größeren Raum ein, welche durch eine Kombination unterschiedlicher Sensoren oder durch eine gezielte Datenverarbeitung ein vollständigeres Bild aktueller Fahrsituationen ermöglichen. Letztere Kategorie gewährleistet insbesondere ein sichereres und auch sichereres autonomes Fahren, da durch die Nutzung unterschiedlicher Datenquellen ein präziseres Abbild der Fahrzeugumgebung erstellt werden kann.

Eine Möglichkeit zur Steuerung eines Fahrzeugs wird beispielsweise in der US 7,437,230 B2 beschrieben. Diese offenbart ein Verfahren zum Steuern eines landwirtschaftlichen Fahrzeugs, umfassend: Empfangen von GPS-Daten (Global Positioning System), einschließlich Positions- und Geschwindigkeitsinformationen, die mindestens einer Position, Geschwindigkeit und einem Kurs des Fahrzeugs entsprechen; Empfangen ein Gierratensignals; und Berechnen eines angepassten Kurses, wobei der angepasste Kurs eine Mischung aus der Gierrate und den Kursinformationen basierend auf den GPS-Daten umfasst. Für jede geplante Fahrspur mit einer Vielzahl geplanter Positionen und geplanten Richtungen umfasst das Verfahren: Berechnen der tatsächlichen Fahrspur und dem entsprechenden Fehler zur geplanten Spur und, basierend auf dem angepassten Kurs und der angepassten Position; Berechnen eines gewünschten Krümmungsradius, um die geplante Fahrspur zu erreichen; und Erzeugen eines Steuerkommandos basierend auf dem geplanten Krümmungsradius und Weitergabe des Steuerkommandos an ein Lenkmechanismus, wobei der Lenkmechanismus konfiguriert ist das Fahrzeug zu steuern.

Ein weiteres Verfahren zur Kontrolle von Fahrmanövern eines Fahrzeuges ist in der EP 0 901 929 B1 angegeben. Die Fahrzeugmanövrier-Steuerungsvorrichtung für ein Fahrzeug weist folgendes auf:

- eine Fahrbahnoberflächenreibungszahl-Schätzeinheit, um aktuelle Werte der Reibungszahl der Fahrbahnoberfläche zu schätzen;
- eine Fahrbahnneigungs-Schätzeinheit, um aktuelle Werte der Fahrbahnneigung (SL) zu schätzen;
- eine Kurvendetektiereinrichtung, um eine Kurve einer Fahrbahn zu detektieren und Kurvendaten einschließlich eines Abstands zwischen dem Fahrzeug und der Kurve sowie einer physikalischen Größe zu berechnen, die einen Grad der Kurve bezeichnet;
- eine Zulässige-Verlangsamungs-Vorgabeeinrichtung, um die zulässige Verlangsamung vorzugeben, mit der das Fahrzeug unter Berücksichtigung der Fahrbahnbedingungen fahren kann;
- eine Zulässige-Querbeschleunigungs-Vorgabeeinrichtung, um die zulässige Querbeschleunigung vorzugeben, mit der das Fahrzeug unter Berücksichtigung der Fahrbahnbedingungen fahren kann;
- eine Zulässige-Annäherungsgeschwindigkeits-Vorgabeeinrichtung, um auf der Basis einer physikalischen Größe und der zulässigen Querbeschleunigung eine zulässige Annäherungsgeschwindigkeit vorzugeben, mit der sich das Fahrzeug der Kurve nähern kann; und
- eine Verlangsamungsbeurteilungsgeschwindigkeits-Recheneinrichtung, die so ausgebildet ist, dass sie auf der Basis des Abstands, der zulässigen Verlangsamungsgeschwindigkeit und der zulässigen Annäherungsgeschwindigkeit eine Verlangsamungsbeurteilungsgeschwindigkeit berechnet, um zu beurteilen, ob eine aktuelle Geschwindigkeit, mit der das Fahrzeug fährt, verringert werden sollte; dadurch gekennzeichnet, dass die Zulässige-Annäherungsgeschwindigkeits-Vorgabeeinrichtung so ausgebildet ist, dass sie auf der Basis der aktuellen Reibungszahl der Fahrbahn und des Krümmungsradius der Kurve eine zulässige Annäherungsgeschwindigkeit vorgibt, mit der sich das Fahrzeug der Kurve nähern kann, wobei die Annäherungsgeschwindigkeit durch den aktuellen Wert der Fahrbahnneigung (SL) eingestellt wird, wobei die Reibungszahl erhalten wird durch Vergleichen einer Gierwinkelreaktion auf der Basis einer Gleichung der Fahrzeugbewegung und eines Ist-Gierwinkels, und wobei die vorgegebene zulässige Annäherungsgeschwindigkeit aktualisiert wird, wenn eine Änderungsrate der Reibungszahl einen gegebenen Wert überschreitet, wobei die Fahrbahnneigung (SL) auf der Basis einer Längsbeschleunigung, die von einem Längsbeschleunigungssensor erhalten wird, und einer Änderungsrate einer aktuellen Fahrzeuggeschwindigkeit für jeden Vorgabezeitpunkt berechnet wird, und wobei die vorgegebene zulässige Annäherungsgeschwindigkeit aktualisiert wird, wenn eine Änderungsrate der Fahrbahnneigung einen gegebenen Wert überschreitet, dass eine Warnungsbeurteilungsgeschwindigkeits-Recheneinrichtung ( 29 ) so ausgebildet ist, dass sie auf der Basis des Abstands, der vorgegebenen zulässigen Verlangsamungsgeschwindigkeit und der vorgegebenen zulässigen Annäherungsgeschwindigkeit eine Warnungsbeurteilungsgeschwindigkeit berechnet, um zu beurteilen, ob dem Fahrer, eine Warnung gegeben werden sollte, und dass eine Warneinrichtung so ausgebildet ist, dass sie den Fahrer warnt, wenn die aktuelle Geschwindigkeit höher als die Warnungsbeurteilungsgeschwindigkeit ist.

Derartige aus dem Stand der Technik bekannte Lösungen können noch weiteres Verbesserungspotential aufweisen, insbesondere hinsichtlich der Nutzung unterschiedlicher Datenquellen zur schnellen und reproduzierbaren Erfassung des aktuellen Umgebungsstatus.

KR 20180136229 A beschreibt ein Fahrzeug und Steuerungsverfahren dafür.

CN 108 569 289 A offenbart ein Verfahren zur Annäherungsdetektion und Zielentscheidung für ein an einem Fahrzeug angebrachtes Radar.

USTUNEL ESER ET AL: "Vision-based road slope estimation methods using road lines or local features from instant image", IET INTELLIGENT TRANSPORT SYSTEMS, THE INSTITUTION OF ENGINEERING AND TECHNOLOGY, MICHAEL FARADAY HOUSE, SIX HILLS WAY, STEVENAGE, HERTS. SG1 2AY, UK, Bd. 13, Nr. 10, 1. Oktober 2019 (2019-10-01), Seiten 1590-1602, XP006082487, ISSN: 1751-956X, DOI: 10.1049/IET-ITS.2018.5479 zeigt eine bildbasierte Schätzung des Querneigungswinkels gekrümmter Fahrbahnen.

Es ist die Aufgabe der vorliegenden Erfindung, die aus dem Stand der Technik bekannten Nachteile zumindest teilweise zu überwinden. Es ist insbesondere die Aufgabe der vorliegenden Erfindung eine Lösung bereitzustellen, durch welche die aktuelle Straßensituation, und hier insbesondere der Querneigungswinkel der Straße, schnell und zuverlässig erkannt werden kann.

Die Lösung der Aufgabe erfolgt erfindungsgemäß durch ein Verfahren mit den Merkmalen des Anspruchs 1, sowie ein Fahrunterstützungssystem gemäß Anspruch 9. Bevorzugte Ausgestaltungen der Erfindung sind in den Unteransprüchen, in der Beschreibung oder den Figuren beschrieben, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Erfindungsgemäß wird ein Verfahren zur Bestimmung des aktuellen Querneigungswinkels $\alpha$ einer Fahrbahn mittels eines Fahrzeuges vorgeschlagen, wobei das Verfahren mindestens die Schritte umfasst:

a) Bestimmung des aktuellen Krümmungsradius K der Fahrbahn;
b) Messen der aktuellen Geschwindigkeiten v(1,2) mindestens zweier unterschiedlicher Räder des Fahrzeugs, wobei eines der Räder mit der Geschwindigkeit v(1) näher zum aktuellen Kurvenmittelpunkt der Fahrbahn liegt;
c) Berechnung des aktuellen Querneigungsradius Q der Fahrbahn auf Basis der aktuellen Radgeschwindigkeit v(1), dem Radabstand d und der Differenz der im Verfahrensschritt b) gemessenen Radgeschwindigkeiten;
d) Berechnung des aktuellen Neigungswinkels $\alpha$ der Fahrbahn unter Verwendung des Quotienten aus dem im Verfahrensschritt a) bestimmten Krümmungsradius K und dem im Verfahrensschritt c) berechneten aktuellen Querneigungsradius Q.

Ein derartiges Verfahren kann gegenüber den Lösungen aus dem Stand der Technik signifikante Vorteile aufweisen, insbesondere hinsichtlich der Schnelligkeit und der Genauigkeit in der Bestimmung des aktuellen Querneigungswinkels einer Fahrbahn. Vorteilhafterweise kann das Verfahren sowohl die Querneigung der Fahrbahn und über die Querneigung der Fahrbahn auch die Querneigung des Fahrzeuges bestimmen. Aufgrund der Tatsache, dass zur Bestimmung des Winkels nur zwei Parameterklassen verwendet werden, der Krümmungsradius der Straße und die Radgeschwindigkeiten, kann der Neigungswinkel mit einer hohen Frequenz bestimmt werden. Insofern kann neben dem Neigungswinkel als solchen auch eine schnelle Veränderung des Fahrbahnneigungswinkels erfasst werden, welches schnell und zuverlässig ungewollte oder potentiell gefährliche Straßenzustände anzeigt. Diese Information kann vorteilhafterweise von diesem oder anderen Systemen auch als Input zur Stabilisierung und Kontrolle des Fahrzeuges genutzt werden. Es ergibt sich also ein robustes und kostengünstiges Verfahren, welche optimaler Weise auf schon bestehenden Sensoren aufsetzen und weitere Informationen zu einem sicheren und auch autonomen Fahren liefern kann. Diese Lösung bietet gegenüber den bisherigen technischen Alternativen also den Vorteil, dass die Anzahl zusätzlicher und teurer Sensoren, wie beispielsweise Beschleunigungssensoren und Gyrosensoren und deren aufwendige Verkabelung, reduziert werden können. Insbesondere kann das Verfahren beispielsweise zur Unterstützung einer Spurkontrolle oder generell zur Stabilisierung einer Fahrzeugtrajektorie, selbst auf stark geneigten Fahrbahnen, beitragen.

Das erfindungsgemäße Verfahren bestimmt den aktuellen Querneigungswinkel $\alpha$ einer Fahrbahn mittels eines Fahrzeuges. Der Querneigungswinkel der Fahrbahn wird also unter Verwendung von Messdaten eines Fahrzeugs berechnet oder bestimmt. Als eine Berechnungsgröße fließen dabei die aktuellen Messdaten in die Bestimmung ein und somit wird über das erfindungsgemäße Verfahren der aktuelle Fahrbahnzustand am Ort des Fahrzeugs oder die aktuelle Fahrbahnneigung abgebildet. Über das Verfahren kann sich zusätzlich auch indirekt der aktuelle Querneigungswinkel des Fahrzeuges ergeben. Letzteres gilt insbesondere dann, wenn beide Räder des Fahrzeugs ohne eigene Schwenkbewegungen des Fahrzeuges Kontakt zur Fahrbahn aufweisen. In diesen Fällen stimmen der Querneigungswinkel des Fahrzeugs und der Querneigungswinkel der Fahrbahn überein. Fahrzeuge können dabei insbesondere motorgetriebene Kraftfahrzeuge wie beispielsweise PKW, Busse oder Lastkraftwagen sein. Als Fahrbahnen kommen insbesondere befestigte Straßen wie Stadt-, Landstraßen oder Autobahnen in Frage. Das erfindungsgemäße Verfahren eignet sich dabei zur Bestimmung des Querneigungswinkels von Fahrbahnen und insbesondere zur Bestimmung des Querneigungswinkels enger Kurven, welche üblicherweise einen höheren Querneigungswinkel als gerade Straßenverläufe aufweisen.

Der Querneigungswinkel $\alpha$ einer Fahrbahn ergibt sich als Funktion des Höhenunterschieds zwischen dem linken und rechten Fahrbahnrand. Schematisch ist dieser Querneigungswinkel weiter hinten in den Figuren dargestellt. Eine Querneigung einer Fahrbahn und damit auch ein Querneigungswinkel ergibt sich gewollt, da Fahrbahnen in der Regel mit einem mehr oder minder großen seitlichen Gefälle ausgestattet werden, um beispielsweise das Abfließen von Regenwasser zu erleichtern. Ebenso wie der Querneigungswinkel einer Fahrbahn ergibt sich der Querneigungswinkel eines Fahrzeugs aus dem lateralen Höhenunterschied zwischen rechter und linker Fahrzeugseite. Große Querneigungswinkel können natürlich die Fahrdynamik des Fahrzeuges beeinflussen und insbesondere bei schnellen Kurvenfahrten zu sichereren Fahrsituationen führen.

Im Verfahrensschritt a) wird der aktuelle Krümmungsradius K der Fahrbahn bestimmt. Der Krümmungsradius einer Fahrbahn ist ein Maß für Abweichung eines Fahrbahnabschnitts von einer Geraden. Der Krümmungsradius ist antiproportional zur Fahrbahnkrümmung und kann sich beispielsweise durch Anpassen eines Kreises an eine zweidimensionale Projektion des aktuellen Fahrbahnabschnitts ergeben. Ist die Fahrbahn im Wesentlichen gerade, also nicht oder ungekrümmt, so erfolgt die Anpassung durch einen Kreis mit großem Radius, da Kreisabschnitte von Kreisen mit großen Radien eher "gerade" Abschnitte bilden. Ist die Fahrbahn stark gekrümmt, beispielsweise in Form einer engen Kurve, so kann der aktuelle Fahrbahnabschnitt mittels eines Kreises mit kleinem Radius approximiert werden. Die zweidimensionale Projektion der Fahrbahn ergibt sich dabei beispielsweise mittels einer Landkartendarstellung oder aus einer zweidimensionalen Projektion von Satellitendaten. Diese Darstellungen liefern quantitative 2D Informationen, also ob die Straße geradeaus, rechts- oder linksgekrümmt verläuft und aus den Fahrbahnverläufen können die Krümmungsradien der betrachteten Abschnitte extrahiert oder berechnet werden. Der Krümmungsradius lässt sich aber auch über weitere bekannte mathematische Methoden zur quantitativen Bestimmung von Krümmungen, beispielsweise an 2D-GPS-Daten, erhalten.

Im Verfahrensschritt b) erfolgt das Messen der aktuellen Geschwindigkeiten v(1,2) mindestens zweier unterschiedlicher Räder des Fahrzeugs, wobei eines der Räder mit der Geschwindigkeit v(1) näher zum aktuellen Kurvenmittelpunkt der Fahrbahn liegt. In die Bestimmung des Querneigungswinkels der Fahrbahn fließen also die aktuellen Radgeschwindigkeiten des Fahrzeugs ein, wobei die Räder an verschiedenen Fahrzeugseiten angeordnet sind. Bezeichnet die aktuelle Fortbewegungsrichtung des Fahrzeugs die Richtung "vorne", so können die beiden Räder einmal an der rechten und einmal an der linken Fahrzeugseite angeordnet sein. Dies hat zur Folge, dass eines der Räder näher zum Kurvenmittelpunkt des aktuellen Fahrbahnabschnitts liegt. Dementsprechend ist das andere Rad weiter vom Kurvenmittelpunkt entfernt. Weist die Fahrbahn beispielsweise eine Linkskrümmung auf, so liegt das linke Rad näher zum aktuellen Kurvenmittelpunkt. Der Begriff Kurvenmittelpunkt bezeichnet dabei den Mittelpunkt des Kreises, welcher zu Anpassung an den aktuellen Fahrbahnabschnitt benutzt wird. Das Messen der aktuellen Radgeschwindigkeiten kann dabei über unterschiedliche Sensoren erfolgen, wobei die Radgeschwindigkeiten jeweils pro Rad, also einzeln, erhoben werden. Bevorzugt erfolgt die Bestimmung der Radgeschwindigkeiten an starren, d.h. nicht lenkbaren, Rädern des Fahrzeuges einer Achse. Es ist aber auch möglich, einen Vergleich der Geschwindigkeiten lenkbarer Räder und auch lenkbarer Räder auf unterschiedlichen Achsen zu nutzen, wobei die mathematische Korrektur der gemessenen Radgeschwindigkeiten zum Erhalt der vergleichbaren Geschwindigkeiten der Räder nur einer Achse dem Fachmann bekannt ist.

Im Verfahrensschritt c) wird der aktuelle Querneigungsradius Q der Fahrbahn auf Basis der aktuellen Radgeschwindigkeit v(1), dem Radabstand d und der Differenz der im Verfahrensschritt b) gemessenen Radgeschwindigkeiten berechnet. Der aktuelle Querneigungsradius Q der Fahrbahn ergibt sich dabei aus der Verlängerung der Strecke zwischen beiden Rädern zum aktuellen Kurvenmittelpunkt hin und ist beispielhaft hinten in den Figuren dargestellt. Der Querneigungsradius ist definiert als derjenige Radius eines Kreises, welcher sich von dem aktuellen Kurvenmittelpunkt der Fahrbahn bis hin zum nächstliegenden Rad erstreckt, wobei die Strecke Kurvenmittelpunkt - nächstliegendes Rad in gerader Linie durch das weitere zur Messung genutzte Rad erstreckt. Zur Berechnung des aktuellen Querneigungsradius der Fahrbahn in m wird also als ein Faktor die Geschwindigkeit des Rades herangezogen, welches näher zum aktuellen Kurvenmittelpunkt liegt. Des Weiteren fließt in die Berechnung die Differenz der Radgeschwindigkeiten von der rechten und linken Fahrzeugseite ein. Beispielsweise kann sich diese für eine linksgekrümmte Fahrbahn aus der Differenz Geschwindigkeit rechtes Rad - Geschwindigkeit linkes Rad ergeben. Der Radabstand d bezeichnet dabei den Abstand in m der beiden zur Messung herangezogenen Räder, wobei in den Fällen in denen die Räder nicht auf einer Achse liegen, die Differenz des jeweiligen Radabstands zum Kurvenmittelbunkt herangezogen wird. In einer bevorzugten Ausführungsform kann für diesen Faktor auch die Fahrzeugbreite herangezogen werden. Basierend auf der Tatsache, dass die Fahrzeugbreite in vielen Fällen im Vergleich zum Krümmungsradius der Fahrbahn deutlich kleiner ist, kann die dadurch auftretende Ungenauigkeit vernachlässigt werden.

Im Verfahrensschritt d) erfolgt die Berechnung des aktuellen Neigungswinkels $\alpha$ der Fahrbahn unter Verwendung des Quotienten aus dem im Verfahrensschritt a) bestimmten Krümmungsradius K und dem im Verfahrensschritt c) berechneten aktuellen Querneigungsradius Q. Aus dem aktuellen Krümmungsradius K der Fahrbahn und dem aktuellen Querneigungsradius Q lässt sich als Funktion des Quotienten (K/Q) der aktuelle Neigungswinkel der Fahrbahn bestimmen. Der Winkel ergibt sich somit mathematsche aus dem Quotienten, wobei noch weitere mathematische Funktionen zur letztendlichen Bestimmung des Winkels auf Basis des Quotienten herangezogen werden können.

In einer bevorzugten Ausgestaltung des Verfahrens kann der aktuelle Querneigungsradius Q der Fahrbahn in Verfahrensschritt c) über folgende Formel I bestimmt werden:

$$Q = \frac{\mathrm{v}(1) * \mathrm{d}}{\mathrm{v}(2) - \mathrm{v}(1)}$$

Der aktuelle Querneigungsradius kann also vorteilhafterweise als Quotient aus dem Produkt der Geschwindigkeit des näher zum Kurvenmittelpunkt liegenden Rades multipliziert mit dem Radabstand als Zähler und der Differenz der unterschiedlichen Radgeschwindigkeiten als Nenner erhalten werden. Der aktuelle Querneigungsradius ergibt sich dabei in m.

In einer weiteren Ausgestaltung des erfindungsgemäßen Verfahrens kann der aktuelle Neigungswinkel $\alpha$ der Fahrbahn in Verfahrensschritt d) über folgende Formel II bestimmt werden:

$$\alpha(t) = \arccos\left(\frac{K}{Q}\right)$$

Der aktuelle Neigungswinkel lässt sich anhand obiger Formel über den Arkus-Cosinus, also aus der Umkehrfunktion des Cosinus, des Quotienten aus aktuellem Krümmungsradius der Fahrbahn und aktuellem Querneigungsradius Q erhalten. Der Querneigungswinkel ist dabei im Bogenmaß angegeben. Es hat sich als vorteilhaft herausgestellt, zur Berechnung des Neigungswinkels diese Funktion als Approximation zu verwenden, da in vielen Fällen die Fahrzeugbreite klein gegenüber dem Querneigungsradius Q ist. Exaktere Ergebnisse können also aus der Berechnung mit der Summe aus Querneigungsradius und Fahrzeugbreite im Nenner erhalten werden.

In einer weiter bevorzugten Ausgestaltung des Verfahrens können im Verfahrensschritt b) die Geschwindigkeiten von Rädern einer Fahrzeugachse gemessen werden. Zur Vereinfachung der Berechnung und zum Erhalt besonders präziser Ergebnisse für den Neigungswinkel, hat es sich als besonders vorteilhaft herausgestellt, dass die Radgeschwindigkeiten an Rädern nur einer Fahrzeugachse verwendet werden. So können beispielsweise die Geschwindigkeiten des vorderen rechten und vorderen linken Rades oder wahlweise der entsprechenden Hinterräder zur Bestimmung herangezogen werden. Bevorzugt können die Radgeschwindigkeiten von nicht lenkbaren Rädern auf einer Fahrzeugachse (vorne, hinten) zur Berechnung herangezogen werden. Dies kann die Berechnung vereinfachen, die Anzahl an Fehlerquellen reduzieren und somit die Geschwindigkeit und Präzision des erfindungsgemäßen Verfahrens erhöhen. Es ist aber auch möglich, die Geschwindigkeiten von Rädern unterschiedlicher Achsen und auch lenkbare Räder einzubeziehen, wobei die gemessenen Geschwindigkeiten dann beispielsweise über die Lenkwinkel korrigiert werden. Die entsprechenden Korrekturen bei lenkbaren Rädern und bei Rädern auf unterschiedlichen Achsen sind dem Fachmann bekannt.

In einem weiteren bevorzugten Aspekt des Verfahrens können die im Verfahrensschritt b) gemessenen Geschwindigkeiten als Funktion des Reifendrucks des jeweiligen Rades angepasst werden. Zum Erhalt besonders genauer Neigungswinkel hat es sich als besonders vorteilhaft herausgestellt, dass die aktuell gemessenen Radgeschwindigkeiten auf einen einheitlichen Reifendruck zurückbezogen werden. Durch diese Normierung werden vergleichbarere Geschwindigkeiten der unterschiedlichen Räder erhalten, was zu einer besonders hohen Präzision zu Bestimmung des Neigungswinkels beitragen kann.

In einer bevorzugten Ausführungsform des Verfahrens können die Verfahrensschritte b)-d) nur in den Fällen durchgeführt werden, in denen im Verfahrensschritt a) der aktuelle Krümmungsradius K der Fahrbahn größer oder gleich 3000 m ist. Zur Erhöhung der Effizienz des Verfahrens hat es sich also besonders vorteilhaft herausgestellt, dass die Verfahrensschritte nur in den Fällen durchgeführt werden, in denen der aktuelle Fahrbahnabschnitt eine gewisse Mindestkrümmung mit entsprechend großem Radius aufweist. Liegt der aktuelle Krümmungsradius unterhalb des angegebenen Grenzwertes, ist die Straße "zu" gerade und üblicherweise liegen auf solch geraden Fahrbahnen nur äußerst geringe Neigungswinkel vor. Insofern kann sich das vorliegende Verfahren besonders für enge Kurvenbereiche eignen, in denen eine exakte Bestimmung des Neigungswinkels aufgrund der herrschenden Fahrdynamik besonders wichtig ist.

Innerhalb einer weiteren bevorzugten Ausgestaltung des Verfahrens kann der aktuelle Krümmungsradius K der Fahrbahn im Verfahrensschritt a) aus GPS- oder Kameradaten bestimmt werden. Zur Bestimmung eines hinreichend genauen und auf die aktuelle Fahrzeugposition bezogenen Krümmungsradius der Fahrbahn haben sich oben genannte Verfahren als besonders schnell und zuverlässig erwiesen. Aus den GPS-Daten lassen sich beispielsweise tabellarisch abgelegte Krümmungsradien der gerade vorliegenden Fahrbahnposition abgreifen. Im Falle einer kamerabasierenden Erfassung des Krümmungsradius kann beispielsweise die vorausliegende Fahrbahn optisch erfasst und aus dem Fahrbahnverlauf die positionsgenauen Krümmungsradien aktuell berechnet werden. Ist das Fahrzeug an dieser Stelle dann angekommen, liegen aktuell verwendbare Daten zum Krümmungsradius vor. Letzteres kann die vorliegende Fahrsituation besonders aktuell Abbilden.

Des Weiteren ist die Verwendung des erfindungsgemäßen Verfahrens als Teil einer Routine zur Kontrolle und/oder Steuerung eines Fahrzeugs vorgesehen. Der aktuelle Querneigungswinkel einer Fahrbahn ist ein wichtiger Parameter, welcher maßgeblichen Einfluss auf die Fahrdynamik von Fahrzeugen, insbesondere bei hohen Geschwindigkeiten und engen Kurven, ausüben kann. Insofern können die Daten des erfindungsgemäßen Verfahrens durch ihre Aktualität und Genauigkeit dazu beitragen, dass weiter im Wagen vorhandene Sicherungs- und Steuerungssysteme auf aktuellere und genauere Daten zurückgreifen können, welches natürlich die automatischen Steuerungsprozesse optimiert. In Summe können also schnellere und richtigere Entscheidungen getroffen werden, welches die Sicherheit des Fahrzeuges und die der anderen Verkehrsteilnehmer erhöht. Des Weiteren ermöglicht die erfindungsgemäße Verwendung im Vergleich zu Stand der Technik auch die Berechnung des lateralen Winkels der Fahrbahn und des Fahrzeuges anhand von Daten, welche einen deutlich geringeren Rauschanteil aufweisen. Dies gilt insbesondere im Vergleich zu eingesetzten Beschleunigungssensoren, sodass auf Basis des geringen Rauschens der verwendeten Sensoren eine deutlich höhere Präzision und Robustheit erreichbar ist.

Weiterhin im Sinne der Erfindung ist ein Fahrunterstützungssystem aufweisend mindestens zwei Räder mit Geschwindigkeitssensoren, eine Steuereinheit, ein GPS-Modul oder eine Kamera, wobei die Steuereinheit im elektrischen Kontakt zu den Geschwindigkeitssensoren der Räder und zur Kamera oder GPS-Modul steht und wobei die Steuereinheit dazu eingerichtet ist das erfindungsgemäße Verfahren auszuführen. Das erfindungsgemäße Verfahren eignet sich insbesondere zur Integration in ein Fahrunterstützungssystem, welches wahlweise autonom oder aber über grafische oder akustische Anweisungen an einen Fahrer mögliche Gefahrenpotenziale bezüglich eines ungewöhnlichen Querneigungswinkels der Fahrbahn oder schnell wechselnden Querneigungswinkel ausgibt. Weiterhin kann über das erfindungsgemäße System ein aktiver Eingriff in die Fahrdynamik des Fahrzeugs erfolgen, beispielsweise über ein Beschleunigen, Abbremsen oder eine Lenkbewegung, sodass das Gefahrenpotential der Fahrsituation reduziert wird. Das Modul kann neben den Geschwindigkeitssensoren auch Vorrichtungen zur Ermittlung des zweidimensionalen Fahrbahnkrümmungsradius in Form einer Kameraeinheit und/oder eines GPS-Moduls, sowie eine zentrale Steuereinheit, beispielsweise eine ECU, aufweisen. Es ist auch möglich, dass das Fahrunterstützungssystem zudem auch die Hallsensoren bereitstellt, welche die Geschwindigkeit einzelner Räder erfassen. Des Weiteren kann das System auch vorzugsweise Tiefpassfilter aufweisen, welche eine Filterung der Hall-Sensordaten vornehmen. Ein derartig ausgerüstetes System kann zu einer weniger rauschanfälligen Messung der Radgeschwindigkeiten beitragen. Des Weiteren wird für die Vorteile des Fahrunterstützungssystems auch explizit auf die oben genannten Vorteile des erfindungsgemäßen Verfahrens verwiesen. Als Fahrunterstützungssystem kommen insbesondere Spurhalte- oder aber auch Lenkunterstützungssysteme in Betracht, welche mittels des erfindungsgemäßen Verfahrens eine höhere Fahrsicherheit und -stabilität bereitstellen können.

In einer bevorzugten Ausführungsform eines Fahrunterstützungssystem kann das Fahrunterstützungssystem ein Spurhaltesystem sein, in welchem die Steuereinheit dazu eingerichtet ist ein Verfahren durchzuführen, in welchem auf Basis der aktuellen Fahrzeuggeschwindigkeit und einem direkt bevorstehenden Krümmungsradius K der Fahrbahn, welcher entweder aus GPS- oder Kameradaten erhalten wird, eine Aussage bezüglich einer sicheren Fahrdynamik des Fahrzeuges erlaubt. Diese Ausgestaltung kann auch eine bevorzugte Ausführungsform eines Verfahrens darstellen. Unter Berücksichtigung der physikalisch wirkenden Kräfte kann, ausgehend von der mathematischen Beschreibung der Zentripetalkraft, unter Vereinfachung und Auskürzen des Fahrzeuggewichts, folgender Zusammenhang hergestellt werden:

$$V_{aktuell}^2(t) < C_{exp}.k_{fric}.g.K_{folgend}(t + \Delta t),$$

wobei in der mathematischen Beziehung $v_{aktuell}$ für die aktuelle Fahrzeuggeschwindigkeit, $k_{fric}$ für den lateralen Reibungskoeffizienten der Fahrbahn, g für die Schwerebeschleunigung, $K_{folgend}$ für den direkt vorausliegenden Krümmungsradius K der Fahrbahn, t einem gewähltem Zeitpunkt, $\Delta t$ einem Zeitintervall und $C_{exp}$ ein experimenteller Faktor zur Anpassung der erhaltenen Ergebnisse darstellen. Insbesondere kann $C_{exp}$ dazu genutzt werden, um eine bessere Anpassung des Modells an die tatsächliche vorliegende Fahrdynamik des Fahrzeugtyps zu erreichen. Diese Anpassung kann, im Gegensatz zu einem reinen Ansatz über das dynamische Verhalten starrer Körper, bessere Ergebnisse liefern. Dieser Verfahrensansatz beinhaltet, dass eine sichere Durchquerung der nächsten Kurve nur dann gewährleistet werden kann, wenn das Quadrat der aktuellen Fahrzeuggeschwindigkeit kleiner ist, als das Produkt auf der rechten Seite obiger Relation. Mögliche Zeitintervalle liegen beispielsweise im Bereich von 5 Sekunden und das Zeitintervall kann bevorzugt variabel als Funktion der aktuellen Geschwindigkeit gewählt werden. So kann sich beispielsweise das 5 Sekunden-Zeitintervall für eine aktuelle Geschwindigkeit von 30 m/s anbieten, da somit ca. 150 m vor Erreichen der nächsten Kurve dem Fahrzeug als Reaktionsweg verbleiben. Für die vorausliegende Kurve kann zur Vereinfachung ein Neigungswinkel von 0° angenommen werden, da der tatsächliche Neigungswinkel der Kurve zu diesem Zeitpunkt noch unbekannt ist und dieser Wert eher eine ungünstige, obere Abschätzung darstellt, welcher falls wirklich zutreffend, zu einer eher gefährlicheren Fahrsituation beitragen würde. Somit kann über diese Beziehung eine Relation zwischen einer zulässigen Geschwindigkeit und Kurven-Neigungswinkeln eingestellt werden, welche im Rahmen eines Verfahrens oder eines Spurhaltesystems zu einem automatischen Abbremsen des Fahrzeugs genutzt werden kann. Auf diese Art und Weise lässt sich die Sicherheit des Fahrens erhöhen und zusätzlich kann diese Ausgestaltung auch als ein Bestandteil autonomer Fahrunterstützungssysteme verwendet werden.

In einer bevorzugten Ausführungsform des Fahrunterstützungssystem kann das Fahrunterstützungssystem dazu eingerichtet sein als Funktion der aktuellen Fahrzeuggeschwindigkeit $v_{aktuell}$, $k_{fric}$ dem lateralen Reibungskoeffizienten der Fahrbahn, g der Schwerebeschleunigung, $K_{folgend}$ dem direkt vorausliegenden Krümmungsradius K der Fahrbahn, t einem gewählten Zeitpunkt, $\Delta t$ einem Zeitintervall und $C_{exp}$ einem experimentellen Faktor; nach folgender mathematischen Beziehung:

$$V_{aktuell}^2(t) < C_{exp}.k_{fric}.g.K_{folgend}(t + \Delta t),$$

eine Abschätzung über die Sicherheit zur Durchquerung der nächsten Kurve mit der aktuellen Fahrzeuggeschwindigkeit zu treffen und in den Fällen, in denen das Quadrat der Fahrzeuggeschwindigkeit größer ist als der rechte Teil der mathematischen Beziehung eine Warnung an den Fahrzeugführer auszugeben oder die Geschwindigkeit des Fahrzeuges zu verringern.

Es ist auch ein Fahrzeug aufweisend ein erfindungsgemäßes Fahrunterstützungssystem vorgesehen. Bezüglich der Vorteile des Fahrzeugs mit einem erfindungsgemäßen Fahrunterstützungssystem wird insbesondere auf die Vorteile des erfindungsgemäßen Verfahrens hingewiesen.

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken.

Es zeigen die

Fig. 1 schematisch eine Darstellung einer Fahrt eines Fahrzeuges auf einer geneigten und gekrümmten Fahrbahn;
Fig. 2 schematisch eine Darstellung der im erfindungsgemäßen Verfahren verwendeten Größen;
Fig. 3 schematisch eine Darstellung der im erfindungsgemäßen Verfahren verwendeten Größen;
Fig. 4 schematisch eine Darstellung einer Ausgestaltung eines erfindungsgemäßen Systems.

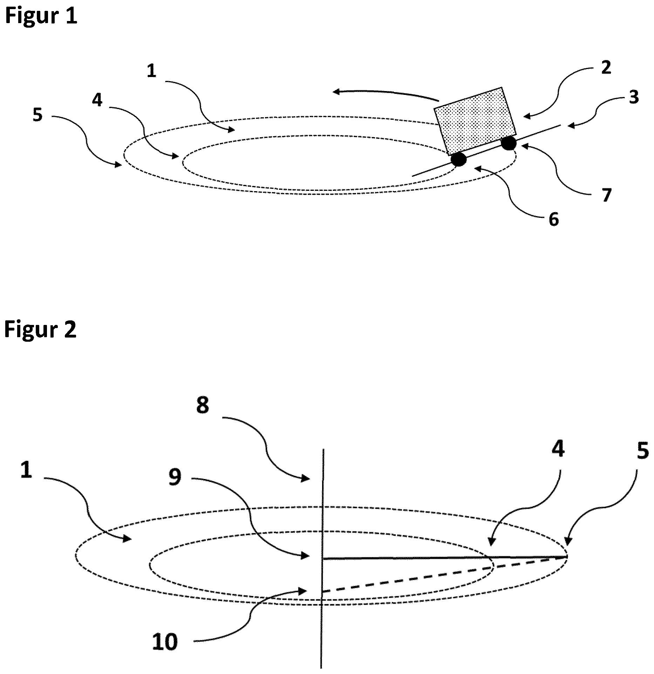

Die Figur 1 zeigt schematisch eine Fahrsituation eines Fahrzeuges (2) auf einer Fahrbahn (1). Die Fahrbahn (1) wird durch den linken (4) und rechten (5) Fahrbahnrand begrenzt, wobei die Definition der Fahrbahnränder (4,5) auf Basis der Fahrtrichtung des Fahrzeuges (2) erfolgt. In der Figur ist schematisch die Rückansicht des Fahrzeugs (2) dargestellt ist. Die Fahrbahnränder (4,5) liegen unterschiedlich hoch, sodass die Fahrzeugachse des Fahrzeuges (2) geneigt dargestellt ist. Beispielsweise kann es sich in dieser Figur um eine Bewegung eines Fahrzeuges (2) in einer Linkskurve handeln, wobei beispielsweise auch nur der aktuelle Fahrbahnausschnitt über die dargestellten Kreise angenähert sein kann. Das Fahrzeug weist in diesem Beispiel zwei Hinterräder (6, 7) auf, wobei das Hinterrad (6) näher zum Mittelpunkt der Fahrbahnkrümmung liegt. Das rechte Rad (7) liegt weiter vom Kurvenmittelpunkt der Linkskurve entfernt. Der Radabstand d des Fahrzeuges ergibt sich aus dem Abstand zwischen dem rechten (7) und dem linken Rad (6).

Die Figur 2 zeigt eine vergleichbare Fahrbahnsituation zur Figur 1, wobei in dieser Darstellung der Übersichtlichkeit halber das Fahrzeug weggelassen wurde. Die Fahrbahn (1) wird durch den linken (4) und rechten (5) Fahrbahnrand begrenzt, wobei die Fahrbahnränder (4,5) unterschiedliche Höhen aufweisen. Der rechte (5) ist im Vergleich zum linken Fahrbahnrand (4) höher dargestellt. Der aktuelle Krümmungsradius K der Fahrbahn (1) ergibt sich aus einer zweidimensionalen Projektion der Fahrbahn (1) und erstreckt sich vom Kreismittelpunkt (9) bis zum rechten Fahrbahnrand (5). Diese Strecke wird auch als das Inverse der Krümmung bezeichnet. Höhenunterschiede der Fahrbahnränder bleiben in dieser Projektion unberücksichtigt, da es sich um eine rein zweidimensionale Projektion der aktuellen Fahrbahnsituation handelt. Die jeweilig zur Fahrbahnsituation passende Kreisanpassung kann beispielsweise über tabulierte Werte erhalten werden, welche als Funktion der GPS-Position abgelegt sind.

Im Gegensatz zum aktuellen Krümmungsradius K der Fahrbahn (1) ergibt sich der Querneigungsradius Q aus einer Strecke, welche die Neigung der Fahrbahn (1) berücksichtigt. Der Querneigungsradius Q der Fahrbahn (1) ergibt sich in der Figur 2 aus der Strecke (10,4). Somit unterscheidet sich der Querneigungsradius Q der Fahrbahn (1) sowohl im Startpunkt auf der Kreisachse als auch durch den Endpunkt am linken Fahrzeugrand (4), welcher in diesem Beispiel mit dem linken Fahrbahnrand (4) zusammenfällt. In den Fällen in denen das Fahrzeug kleiner ist als die Fahrbahn (1) ergibt sich der Querneigungsradius Q auf Basis einer gedachten Linie durch das rechte (7) und linke Fahrzeugrad (6) hin zum Kreismittelpunkt (10), wobei sich der Querneigungsradius Q nur aus der Strecke vom Kreismittelpunkt zum kurvennächstem Rad, in diesem Fall dem linken Rad (6) ergibt. Unter Berücksichtigung der Fahrbahnsteigung ergibt sich also ein anderer Radius, welcher umso unterschiedlicher ausfällt, je höher die Steigung der Fahrbahn ist.

Auf Basis der Annahme, dass die Winkelgeschwindigkeiten vom rechten (7) und linken (6) Rad des Fahrzeuges gleich sein müssen, ergibt sich folgender Zusammenhang für die aktuelle Winkelgeschwindigkeit w(t) der einzelnen Räder:

$$\omega(t) = \frac{v(1)}{Q} = \frac{v(2)}{Q+d}$$

Die aktuelle Winkelgeschwindigkeit ergibt sich also aus der aktuellen Geschwindigkeit des linken Rads (6) v(1), welche gleich sein muss zur Winkelgeschwindigkeit des rechten Rades (7) mit der Geschwindigkeit v(2). Diese Gleichung lässt sich nach dem Querneigungsradius Q auflösen und man erhält:

$$Q = \frac{v(1) * d}{v(2) - v(1)}$$

Auf Basis dieser Gleichung ergibt sich der aktuelle Neigungswinkel $\alpha$ zu

$$\alpha = arccos\left(\frac{K}{Q+d}\right) \approx \arccos\left(\frac{K}{Q}\right)$$

Diese Beziehung ergibt sich unter der Annahme, dass der Radabstand d sehr klein gegenüber dem Querneigungsradius Q ist.

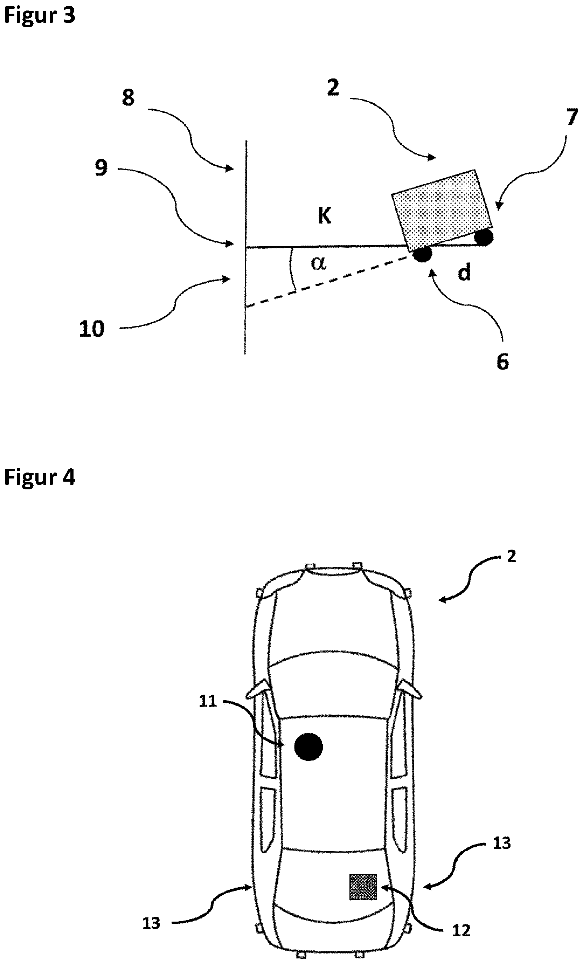

Die Figur 3 beschreibt dieselbe Situation wie in den Figuren 1 und 2, wobei der Übersichtlichkeit halber die Fahrbahn weggelassen wurde. Der aktuelle Krümmungsradius K der Fahrbahn ergibt sich aus der Strecke (9, 6), also von der Kreismittelachse bis zum kurvenfernsten, dem rechten Rad (6). Der Querneigungsradius Q ergibt sich aus der Strecke (10, 7), also von der Kreismittelachse bis hin zum linken Rad (7) des Fahrzeugs. Aus beiden Größen K und Q lässt sich, wie oben gezeigt, der aktuelle Querneigungswinkel oder Fahrbahn bestimmen.

Die Figur 4 zeigt schematisch eine erfindungsgemäße Ausgestaltung eines erfindungsgemäßen Fahrunterstützungssystems. Dargestellt ist ein Fahrzeug (2), welches Hinterräder mit Hallsensoren (13) aufweist. Des Weiteren weist das Fahrzeug (2) eine Steuereinheit in Form einer ECU (Electronic Control Unit, 12) sowie ein GPS-Modul (11) oder eine Kamera (11) auf. Die einzelnen Komponenten des Systems stehen zumindest über die Steuereinheit (12) in elektrischer Verbindung und die ECU (12) ist eingerichtet, die erforderlichen Schritte des erfindungsgemäßen Verfahrens auszuführen und den Neigungswinkel der Fahrbahn (1) unter Verwendung der Kamera/GPS-Daten und der Geschwindigkeitsdaten der Räder zu bestimmen.

Bezugszeichen

1    Fahrbahn

2     Fahrzeug (Rückansicht)
3     Fahrzeugachse
4     linke Fahrbahnbegrenzung
5     rechte Fahrbahnbegrenzung
6     linkes Fahrzeugrad
7     rechtes Fahrzeugrad
8     Kurvenmittelpunkt
9     Krümmungsradius K der Fahrbahn
10    Querneigungsradius Q
11    GPS-Sensor oder Kamera
12    ECU
13    Hinterrad mit Geschwindigkeitssensoren

**Patentansprüche**

1. Verfahren zur Bestimmung des aktuellen Querneigungswinkels $\alpha$ einer Fahrbahn (1) mittels eines Fahrzeuges (2), mindestens umfassend die Schritte:

    a) Bestimmung des aktuellen Krümmungsradius K der Fahrbahn (1);
    b) Messen der aktuellen Geschwindigkeiten v(1,2) mindestens zweier unterschiedlicher Räder (6,7) des Fahrzeugs (2), wobei eines der Räder (6) mit der Geschwindigkeit v(1) näher zum aktuellen Kurvenmittelpunkt (8) der Fahrbahn (1) liegt;
    c) Berechnung des aktuellen Querneigungsradius Q der Fahrbahn (1) auf Basis der aktuellen Radgeschwindigkeit v(1), dem Radabstand d und der Differenz der im Verfahrensschritt b) gemessenen Radgeschwindigkeiten;
    d) Berechnung des aktuellen Neigungswinkels $\alpha$ der Fahrbahn (1) unter Verwendung des Quotienten aus dem im Verfahrensschritt a) bestimmten Krümmungsradius K und dem im Verfahrensschritt c) berechneten aktuellen Querneigungsradius Q.

2. Verfahren nach Anspruch 1, wobei der aktuelle Querneigungsradius Q der Fahrbahn (1) in Verfahrensschritt c) über folgende Formel I bestimmt wird:

$$Q = \frac{v(1) * d}{v(2) - v(1)}$$

3. Verfahren nach einem der vorhergehenden Ansprüche, wobei der aktuelle Neigungswinkel $\alpha$ der Fahrbahn (1) im Verfahrensschritt d) über folgende Formel II bestimmt wird:

$$\alpha = \arccos\left(\frac{K}{Q}\right)$$

4. Verfahren nach einem der vorhergehenden Ansprüche, wobei im Verfahrensschritt b) die Geschwindigkeiten von Rädern (6, 7) einer Fahrzeugachse gemessen werden.

5. Verfahren nach einem der vorhergehenden Ansprüche, wobei die im Verfahrensschritt b) gemessenen Geschwindigkeiten als Funktion des Reifendrucks des jeweiligen Rades (6, 7) angepasst werden.

6. Verfahren nach einem der vorhergehenden Ansprüche, wobei die Verfahrensschritte b)-d) nur in den Fällen durchgeführt werden, in denen im Verfahrensschritt a) der aktuelle Krümmungsradius K der Fahrbahn (1) kleiner oder gleich 3000 m ist.

7. Verfahren nach einem der vorhergehenden Ansprüche, wobei der aktuelle Krümmungsradius K der Fahrbahn (1) im Verfahrensschritt a) aus GPS- oder Kameradaten bestimmt wird.

8. Verwendung des Verfahrens nach einem der vorhergehenden Ansprüche als Teil einer Routine zur Kontrolle und/oder Steuerung eines Fahrzeuges (2).

9. Fahrunterstützungssystem aufweisend mindestens zwei Räder mit Geschwindigkeitssensoren (13), eine Steuereinheit (12), ein GPS-Modul (11) oder eine Kamera (11), wobei die Steuereinheit (12) im elektrischen Kontakt zu den Geschwindigkeitssensoren der Räder (13) und zur Kamera (11) oder GPS-Modul (11) steht und wobei die Steuereinheit (12) dazu eingerichtet ist das Verfahren nach einem der Ansprüche 1-7 auszuführen.

10. Fahrunterstützungssystem nach Anspruch 9, wobei das Fahrunterstützungssystem dazu eingerichtet ist, als Funktion der aktuellen Fahrzeuggeschwindigkeit $v_{aktuell}$, $k_{fric}$ dem lateralen Reibungskoeffizienten der Fahrbahn, g der Schwerebeschleunigung, $K_{folgend}$ dem direkt vorausliegenden Krümmungsradius K der Fahrbahn, t einem gewähltem Zeitpunkt, $\Delta t$ einem Zeitintervall und $C_{exp}$ einem experimentellen Faktor; nach folgender mathematischen Beziehung:

$$V_{aktuell}^2(t) < C_{exp}.k_{fric}.g.K_{folgend}(t + \Delta t),$$

eine Abschätzung über die Sicherheit zur Durchquerung der nächsten Kurve mit der aktuellen Fahrzeuggeschwindigkeit zu treffen und in den Fällen, in denen das Quadrat der Fahrzeuggeschwindigkeit größer ist als der rechte Teil der mathematischen Beziehung, eine Warnung an den Fahrzeugführer auszugeben oder die Geschwindigkeit des Fahrzeuges zu verringern.

11. Fahrzeug (2) mit einem Fahrunterstützungssystem nach Anspruch 9 oder 10

**Claims**

1. Method for determining the current angle of lateral inclination $\alpha$ of a roadway (1) by means of a vehicle (2), at least comprising the steps of:

   a) determining the current radius of curvature K of the roadway (1);
   b) measuring the current velocities v(1,2) of at least two different wheels (6,7) of the vehicle (2), one of the wheels (6) with the velocity v(1) lying closer to the current center of the curve (8) on the roadway (1);
   c) calculating the current radius of lateral inclination Q of the roadway (1) on the basis of the current wheel velocity v(1), the wheel distance d and the difference between the wheel velocities measured in method step b);
   d) calculating the current angle of inclination $\alpha$ of the roadway (1) using the quotient of the radius of curvature K determined in method step a) and the current radius of lateral inclination Q calculated in method step c).

2. Method according to Claim 1, the current radius of lateral inclination Q of the roadway (1) being determined in method step c) using the following formula I:

$$Q = \frac{v(1) * d}{v(2) - v(1)}$$

3. Method according to either of the preceding claims, the current angle of inclination $\alpha$ of the roadway (1) being determined in method step d) using the following formula II:

$$\alpha = \arccos\left(\frac{K}{Q}\right)$$

4. Method according to one of the preceding claims, the velocities of wheels (6, 7) of one vehicle axle being measured in method step b).

5. Method according to one of the preceding claims, the velocities measured in method step b) being adjusted as a function of the tire pressure of the respective wheel (6, 7).

6. Method according to one of the preceding claims, method steps b)-d) only being carried out in those cases in which in method step a) the current radius of curvature K of the roadway (1) is less than or equal to 3000 m.

7. Method according to one of the preceding claims, the current radius of curvature K of the roadway (1) being determined in method step a) from GPS or camera data.

8. Use of the method according to one of the preceding claims as part of a routine for monitoring and/or controlling a vehicle (2).

9. Driver assistance system having at least two wheels with velocity sensors (13), a control unit (12), a GPS module (11) or a camera (11), the control unit (12) being in electrical contact with the velocity sensors of the wheels (13) and with the camera (11) or GPS module (11) and the control unit (12) being set up to carry out the method according to one of Claims 1-7.

10. Driver assistance system according to Claim 9, the driver assistance system being set up to postulate, as a function of the current vehicle velocity $v_{current}$, $k_{fric}$ the lateral friction coefficient of the roadway, g the gravitational acceleration, $K_{following}$ the radius of curvature K of the roadway directly ahead, t a selected point in time, $\Delta t$ a time interval and $C_{exp}$ an experimental factor and according to the following mathematical relationship:

$$V_{current}^2(t) < C_{exp}.k_{fric}.g.K_{following}(t + \Delta t),$$

an estimate of the safety of traversing the next curve at the current vehicle velocity and, in cases where the square of the vehicle velocity is greater than the right-hand part of the mathematical relationship, issue a warning to the driver or reduce the velocity of the vehicle.

11. Vehicle (2) with a driver assistance system according to Claim 9 or 10.

**Revendications**

1. Procédé permettant de déterminer l'angle d'inclinaison transversale actuel $\alpha$ d'une chaussée (1) au moyen d'un véhicule (2), comprenant au moins les étapes consistant à :

a) déterminer le rayon de courbure actuel K de la chaussée (1) ;
b) mesurer les vitesses actuelles v(1,2) d'au moins deux roues différentes (6, 7) du véhicule (2), dans lequel l'une des roues (6) à la vitesse v(1) est plus proche du point central de courbe actuel (8) de la chaussée (1) ;
c) calculer le rayon d'inclinaison transversale actuel Q de la chaussée (1) sur la base de la vitesse de roue actuelle v(1), de l'empattement d et de la différence des vitesses de roue mesurées à l'étape de procédé b) ;
d) calculer l'angle d'inclinaison actuel $\alpha$ de la chaussée (1) en utilisant le quotient du rayon de courbure K déterminé à l'étape de procédé a) et du rayon d'inclinaison transversale Q calculé à l'étape de procédé c).

2. Procédé selon la revendication 1, dans lequel le rayon d'inclinaison transversale actuel Q de la chaussée (1) est déterminé à l'étape de procédé c) par la formule I suivante :

$$Q = \frac{v(1) * d}{v(2) - v(1)}$$

3. Procédé selon l'une quelconque des revendications précédentes, dans lequel l'angle d'inclinaison actuel $\alpha$ de la chaussée (1) est déterminé à l'étape de procédé d) par la formule II suivante :

$$\alpha = arccos\left(\frac{K}{Q}\right)$$

4. Procédé selon l'une quelconque des revendications précédentes, dans lequel les vitesses des roues (6, 7) d'un essieu de véhicule sont mesurées à l'étape de procédé b).

**5.** Procédé selon l'une quelconque des revendications précédentes, dans lequel les vitesses mesurées à l'étape de procédé b) sont adaptées en fonction de la pression de pneu de la roue respective (6, 7).

**6.** Procédé selon l'une quelconque des revendications précédentes, dans lequel les étapes de procédé b) à d) ne sont effectuées que dans les cas où à l'étape de procédé a) le rayon de courbure actuel K de la chaussée (1) est inférieur ou égal à 3000 m.

**7.** Procédé selon l'une quelconque des revendications précédentes, dans lequel le rayon de courbure actuel K de la chaussée (1) est déterminé à l'étape de procédé a) à partir de données de GPS ou de caméra.

**8.** Utilisation du procédé selon l'une quelconque des revendications précédentes dans le cadre d'une routine de contrôle et/ou de commande d'un véhicule (2).

**9.** Système d'assistance au conducteur, présentant au moins deux roues pourvues de capteurs de vitesse (13), une unité de commande (12), un module GPS (11) ou une caméra (11), dans lequel l'unité de commande (12) est en contact électrique avec les capteurs de vitesse des roues (13) et avec la caméra (11) ou le module GPS (11), et dans lequel l'unité de commande (12) est conçue pour effectuer le procédé selon l'une quelconque des revendications 1 à 7.

**10.** Système d'assistance au conducteur selon la revendication 9, dans lequel le système d'assistance au conducteur est conçu, en fonction de la vitesse actuelle $v_{aktuell}$, du coefficient de frottement latéral $k_{fric}$ de la chaussée, de l'accélération de la pesanteur g, du rayon de courbure K directement imminent $K_{folgend}$, d'un instant sélectionné t, d'un intervalle de temps $\Delta t$ et d'un facteur expérimental $C_{exp}$ ; selon la relation mathématique suivante :

$$V_{aktuell}^2(t) < C_{exp}.k_{fric}.g.K_{folgend}(t + \Delta t)$$

pour procéder à une estimation concernant la sécurité de négocier le virage suivant à la vitesse de véhicule actuelle, et dans les cas où le carré de la vitesse de véhicule est supérieur à la partie de droite de la relation mathématique, pour émettre un avertissement à destination du conducteur du véhicule ou diminuer la vitesse du véhicule.

**11.** Véhicule (2) comprenant un système d'assistance au conducteur selon la revendication 9 ou 10.

## Figur 1

## Figur 2

## Figur 3

## Figur 4

**IN DER BESCHREIBUNG AUFGEFÜHRTE DOKUMENTE**

**In der Beschreibung aufgeführte Patentdokumente**

- US 7437230 B2
- EP 0901929 B1
- KR 20180136229 A
- CN 108569289 A

**In der Beschreibung aufgeführte Nicht-Patentliteratur**

- **USTUNEL ESER et al.** Vision-based road slope estimation methods using road lines or local features from instant image. *IET INTELLIGENT TRANSPORT SYSTEMS, THE INSTITUTION OF ENGINEERING AND TECHNOLOGY, MICHAEL FARADAY HOUSE, SIX HILLS WAY, STEVENAGE, HERTS. SG1 2AY, UK,* 01. Oktober 2019, vol. 13 (10), ISSN 1751-956, 1590-1602